(19) Europäisches Patentamt
European Patent Office
Office européen des brevets

(11) **EP 1 358 505 B1**

(12) **FASCICULE DE BREVET EUROPEEN**

(45) Date de publication et mention de la délivrance du brevet:
**30.05.2012 Bulletin 2012/22**

(21) Numéro de dépôt: 02708403.7

(22) Date de dépôt: **18.01.2002**

(51) Int Cl.:
*G01S 7/41* *(2006.01)*    *G01S 13/524* *(2006.01)*

(86) Numéro de dépôt international:
**PCT/FR2002/000224**

(87) Numéro de publication internationale:
**WO 2002/063335 (15.08.2002 Gazette 2002/33)**

(54) **REJECTION DE FOUILLIS DANS UN RECEPTEUR RADAR PASSIF DE SIGNAUX OFDM**

STÖRECHOUNTERDRÜCKUNG IN EINEM PASSIVEN RADAREMPFÄNGER FÜR OFDM SIGNALE

CLUTTER REJECTION IN A PASSIVE RADAR RECEIVER OF OFDM SIGNALS

(84) Etats contractants désignés:
**AT BE CH CY DE DK ES FI FR GB GR IE IT LI LU MC NL PT SE TR**

(30) Priorité: **07.02.2001 FR 0101695**

(43) Date de publication de la demande:
**05.11.2003 Bulletin 2003/45**

(73) Titulaire: **ONERA (Office National d'Etudes et de Recherches Aérospatiales) 92320 Châtillon (FR)**

(72) Inventeur: **POULLIN, Dominique F-92320 Chatillon (FR)**

(74) Mandataire: **Gevers France 23bis, rue de Turin 75008 Paris (FR)**

(56) Documents cités:
**EP-A- 0 681 190    FR-A- 2 776 438 US-A- 5 973 642**

**Description**

La présente invention concerne un récepteur radar passif recevant un signal radioélectrique composé de trames de symboles émis chacun sur des porteuses orthogonales codées.

Dans le domaine radar, il est généralement difficile, voire impossible, d'atteindre les performances limites atteignables en terme de détection pour une cible mobile. En effet, ces performances, qui sont fixées par le rapport signal à bruit thermique en sortie d'un filtre adapté dans le récepteur radar, sont généralement limitées, en pratique, non pas par le niveau de bruit thermique mais par le niveau associé au fouillis en sortie du filtre adapté. Le terme fouillis est, ici, à prendre au sens large puisqu'il désigne l'ensemble des trajets à Doppler nul. Par exemple, pour un radar bistatique dont l'émetteur et le récepteur sont distants, le fouillis désigne l'ensemble des trajets suivants : trajet directement issu de l'émetteur ainsi que chaque trajet reçu après réflexion sur un obstacle fixe.

Divers procédés de réjection de ces signaux indésirables sont connus mais présentent des inconvénients non négligeables. Par exemple, les procédés de réjection adaptatifs basés sur l'utilisation d'une matrice de covariance des signaux reçus par un réseau de capteurs présentent les limitations suivantes :

- Ils n'éliminent qu'un nombre limité de signaux d'interférence décorrélés, caractérisés par leur direction. En conséquence, ces procédés ne sont pas optimaux dans le cadre de la lutte contre le fouillis lorsque celui-ci est riche en multitrajets de retards différents.
- Ils entraînent la création d'axes aveugles, liés aux signaux rejetés, suivant lesquels il devient impossible de détecter une cible.
- Ils ne rejettent que des signaux dont le rapport signal à bruit est positif en sortie de compression angulaire. Cette réjection est limitative lorsqu'elle est effectuée en tête de traitement radar, c'est-à-dire avant la compression distance-Doppler.

L'invention est plus particulièrement dirigée vers la réjection de l'ensemble des trajets à Doppler nul dans le fouillis capté par un récepteur radar passif de signaux particuliers de type OFDM (Orthogonal Frequency Division Multiplex). Les signaux OFDM sont caractérisés par l'émission simultanée d'un grand nombre de sous-porteuses orthogonales codées à plusieurs états de phase ou en amplitude, c'est-à-dire par un spectre de raies orthogonales au sens de la transformée de Fourier sur une durée finie T, équidistantes en l/T.

Selon la demande de brevet FR 2776438, un radar bistatique traite des signaux de radiocommunication numériques au format COFDM (Coded OFDM) dans le cadre de radiodiffusion et de télédiffusion de programmes selon les normes européennes DAB (Digital Audio Broadcasting) et DVB (Digital Video Broadcasting). Ces signaux émis ainsi par des émetteurs d'opportunité pour des applications de récepteur radar passif assurent une utilisation optimale du spectre émis, d'une manière similaire à un bruit blanc, et sont résistants aux multitrajets et interférences.

Selon ce brevet, le récepteur radar comprend plusieurs antennes de réception pour détecter ces signaux. Le traitement radar repose sur la corrélation Doppler-distance des signaux reçus avec une référence temporelle de signal émis. La référence temporelle est obtenue en décodant les signaux enregistrés conformément aux opérations effectuées en radio-télécommunications.

Cependant, étant donnée la nature bistatique du système radar, la puissance du signal de trajet direct est élevée par rapport à celle du signal utile réfléchi par une cible. Le trajet direct devrait être rejeté avant d'effectuer la corrélation Doppler-distance. L'énergie contenue dans les lobes secondaires distance-Doppler du trajet direct est généralement nettement supérieure au niveau de bruit thermique, si bien que des cibles situées à proximité du trajet direct sont difficilement détectables.

La demande de brevet EP 0 681 190 divulgue une voie de synchronisation dans un récepteur radar d'un signal reçu à porteuses orthogonales OFDM. La voie de synchronisation comprend un circuit de calcul de moyenne glissante entre un convertisseur analogique-numérique et un convertisseur numérique-analogique relié à un soustracteur précédant un circuit de traitement en distance et Doppler. Le circuit de calcul de moyenne glissante comporte une batterie de filtres opérant dans le domaine temporel et un convertisseur parallèle-série en sortie des filtres pour effectuer une moyenne glissante sur des périodes du signal émis de manière à ne conserver que le trajet direct et "éliminer" la contribution des cibles à Doppler non nul. Ce signal conservé est, après conversion numérique-analogique, alors soustrait du signal reçu pour minimiser le trajet direct dans les voies cibles. Toutefois, cette soustraction étant effectuée en analogique et qui plus est à partir de coefficients estimés temporellement et décalés dans le temps ne peut que présenter une efficacité plus faible que des réalisations en numérique.

L'invention a pour objectif de réduire, voire supprimer dans le domaine fréquentiel la contribution du trajet direct et plus généralement de signaux parasites à effet Doppler nul dans le traitement des signaux reçus avant la corrélation Doppler-distance.

Pour atteindre cet objectif, un récepteur radar selon une première réalisation de l'invention traitant un signal radioélectrique reçu à travers un canal de propagation et composé de trames de symboles émis chacun sur des porteuses orthogonales codées, comprend des moyens tels que définis dans la revendication 1.

Cette première réalisation élimine les signaux parasites à effet Doppler nul, c'est-à-dire essentiellement les signaux dûs aux trajets directs et multiples depuis un émetteur donné.

Afin de mieux caractériser la fonction de transfert du canal de propagation indépendamment de signaux rétrodiffusés sur des cibles, les raies spectrales des signaux parasites sont estimées pour chaque symbole et moyennées sur chaque trame dans le moyen pour détecter, avant d'être soustraites aux raies spectrales du signal numérique de symboles. Dans cette première réalisation est alors prévu un moyen pour estimer une réplique de signal émis en fonction des raies spectrales des signaux parasites à effet Doppler nul, la réplique estimée étant corrélée au signal filtré dans le moyen de corrélation Doppler-distance.

Selon une deuxième réalisation de l'invention, un récepteur radar comporte plusieurs moyens de réception pour mettre plusieurs signaux reçus sous forme de signaux numériques de symboles, et comprend des moyens tels que définis dans la revendication 4. Cette deuxième réalisation élimine également des signaux brouilleurs autres que des signaux corrélés codés de type COFDM.

Afin de mieux caractériser la fonction de transfert du canal de propagation, les produits de raies spectrales dont dépendent les matrices de covariances dépendent de raies spectrales de symboles et sont moyennés sur chaque trame.

Dans la deuxième réalisation est en outre prévu un moyen pour estimer une réplique de signal émis en fonction des raies spectrales de l'un des signaux de symbole par estimation de coefficients de la fonction de transfert du canal de propagation dans les signaux parasites à effet Doppler nul, la réplique estimée étant corrélée aux signaux de symboles filtrés numériques dans le moyen de corrélation.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un diagramme temporel de symboles successifs dans un signal COFDM émis ;
- la figure 2 est un diagramme temporel d'une trame de signal COFDM ;
- la figure 3 est un diagramme de trajets direct, multiples et réfléchi par une cible entre un émetteur et un récepteur ;
- la figure 4 montre les sorties des différents contributeurs (trajet direct, multi-trajets, cible, bruit) en sortie de corrélateur ;
- la figure 5 est un bloc-diagramme schématique d'un récepteur radar avec une antenne selon une première réalisation de l'invention ;
- la figure 6 est un bloc-diagramme schématique d'un récepteur radar avec plusieurs antennes selon une deuxième réalisation de l'invention ;
- la figure 7 est un diagramme de rayonnement du réseau d'antennes du récepteur radar selon la deuxième réalisation.

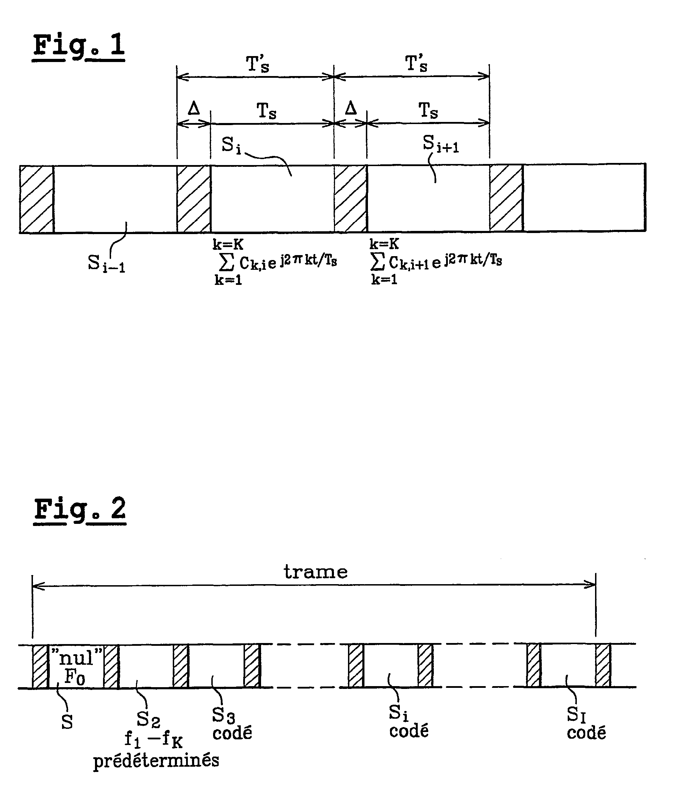

Les caractéristiques principales de signaux COFDM en radiocommunications sont rappelées ci-après, en référence à la figure 1.

Ces signaux en bande de base sont émis par période de symbole $T'_S$. Un message contenu dans chacun de ces symboles émis est porté par un nombre important de sinusoïdes émises simultanément. Ces sinusoïdes constituent des sous-porteuses, appelées ci-après "porteuses" par souci de simplification, et sont codées en phase ou en amplitude. Les fréquences de porteuses $f_1$ à $f_K$ sont équidistantes de $1/T_S$. Chaque symbole émis $S_i$ résulte de la somme suivante de porteuses pendant la durée $T'_S$ ($T'_S > T_S$) :

$$S_i = \sum_{k=1}^{k=K} C_{k,i}\, e^{2j\pi kt/T_S}$$

où j désigne l'imaginaire pur racine de -1 ($j^2 = -1$), et t la variable temps.

Les porteuses aux fréquences $f_k = k/T_S$ avec $1 \le k \le K$ sont donc orthogonales sur la durée $T_S$. $\Delta = T'_S - T_S$ désigne l'intervalle de garde.

Sur une période d'analyse $T_S$, les signaux COFDM constituent ainsi un signal de bande $K/T_S$ composé d'un spectre de K raies équidistantes du pas de fréquence $1/T_S$ et chacune de largeur $1/T_S$. Les porteuses sont modulées individuellement à l'aide, par exemple, d'un code à quatre états de phase exprimés par les coefficients complexes $C_{k,i}$

appartenant à l'alphabet (1+j, 1-j, -1+j, -1-j).

En pratique, un message de données peut n'occuper que quelques fréquences $f_k$ sur quelques périodes de symbole $T'_S$ dans le multiplex temporel et fréquentiel de K fréquences et de I intervalles de temps.

A l'émission, les symboles sont organisés en trame. Chaque trame montrée à la figure 2 comprend I symboles $S_1$ à $S_I$. Le premier symbole $S_1$ de la trame est un symbole "nul" ne portant aucune information et est constitué de la fréquence porteuse de modulation $F_0$ du signal émis. Le symbole $S_1$ sert de synchronisation de trame, c'est-à-dire de référence temporelle. Le deuxième symbole $S_2$ de la trame sert notamment à l'apprentissage du canal de propagation dans le récepteur radar et contient les K porteuses ou sinusoïdes prises aux fréquences $f_1$ à $f_K$ ayant des phases prédéterminées dans l'émetteur. Ces K porteuses dans le symbole $S_1$ sont utilisées dans le récepteur radar, pour estimer le signal émis, chaque porteuse $f_k$ servant de référence en fréquence et phase. Grâce aux deux premiers symboles peuvent être ainsi acquis au moins les paramètres d'émission $F_0$, $T_S$ et $f_1$ à $f_K$. Les autres symboles $S_3$ à $S_I$ sont destinés à supporter un ou plusieurs messages de données occupant partiellement ou non chaque symbole.

A la réception, en radiocommunication les symboles sont récupérés à l'aide d'une analyse fréquentielle des signaux COFDM reçus sur la durée $T_S$. Les fréquences émises étant orthogonales au sens d'une transformée de Fourier FFT, chacune des porteuses est démodulée afin de restituer l'information.

En pratique, l'orthogonalité des fréquences émises est dégradée par les interférences suivantes :

- interférences intersymboles intraporteuses : superposition de signaux codés différemment ou durée d'analyse $T_S$ non adaptée au code ;
- interférences intersymbole interporteuses : signaux non orthogonaux sur la durée d'analyse $T_S$ ;
- interférences intrasymboles intraporteuses : superposition de signaux codés différemment ;
- interférences intrasymboles interporteuses : signaux non stationnaires.

Ces interférences sont liées aux trajets multiples dans le canal de propagation entre l'émetteur et le récepteur.

L'adjonction de l'intervalle de garde $\Delta$ à chaque période de symbole $T'_S$ permet de s'affranchir de toutes les interférences, lorsque l'intervalle de garde $\Delta$ est supérieur à l'étalement temporel du canal de propagation dû aux trajets multiples : il existe alors pour chaque durée $T'_S$ une plage de longueur $T_S$ dans laquelle tous les signaux reçus issus des multitrajets sont codés de façon identique.

Le traitement des signaux reçus comprenant une corrélation Doppler-distance, la fonction d'ambiguïté des signaux COFDM et notamment ses lobes secondaires doivent être étudiés. Les lobes secondaires de la fonction d'ambiguïté associée à la forme d'onde COFDM sont relativement uniformes dans le plan distance-Doppler, et leur niveau par rapport au lobe principal est de $-10.\log_{10}(I.K)$. Les lobes secondaires sont moins élevés au pied du pic principal.

L'étude classique du bilan radar montre qu'en général l'énergie contenue dans les lobes secondaires associés au trajet direct est prépondérante vis-à-vis du bruit thermique.

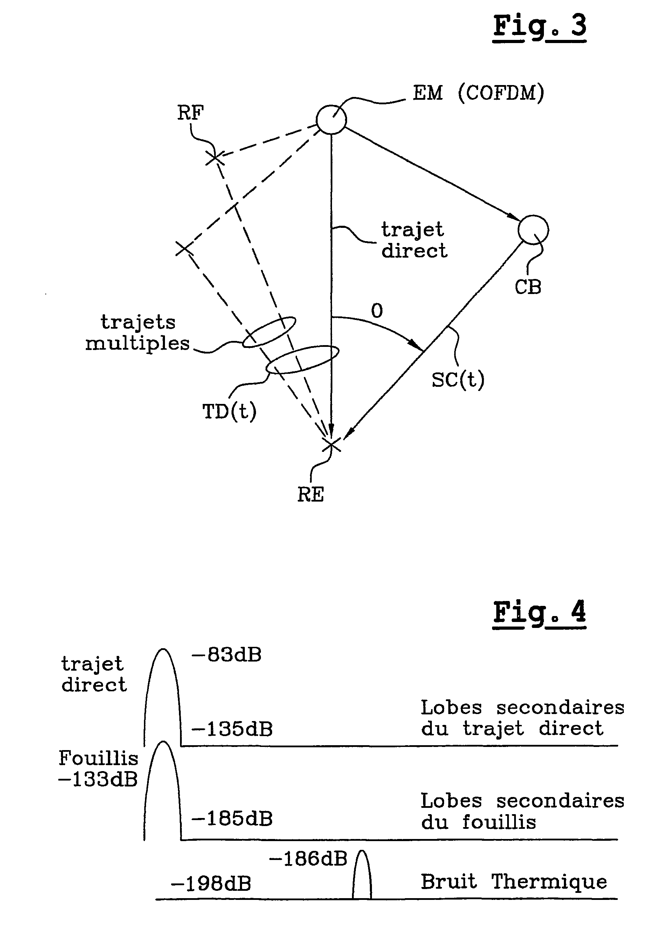

A titre d'exemple, on considère un radar bistatique montré à la figure 3 avec un émetteur EM de puissance électromagnétique rayonnée $P_eG_e$ = 1000 W, un gain d'antenne de récepteur RE, $G_r$ = 10 dB, une longueur d'onde $\lambda$ = 1 m correspondant à la fréquence $F_0$ = 300 MHz, une distance émetteur-récepteur d = 40 km, des distances émetteur-cible EM-CB et distances cible-récepteur CB-RE égales à 40 km, un facteur de bruit F = 6 dB, une surface équivalente radar SER = 0 dB, I = 100 symboles de durée $T_S$ = 1 ms et un intervalle de garde de 250 $\mu$s pour une durée de trame de 125 ms, et K = 1500 porteuses pour une largeur de bande de B = 1,5 MHz.

Le bilan de liaison entre l'émetteur EM et le récepteur RE est montré à la figure 4.

L'énergie contenue dans les lobes secondaires attachés au trajet direct et au fouillis (clutter) dû aux trajets multiples est prépondérante par rapport au bruit thermique. Le niveau d'énergie des lobes du trajet direct se trouve à 186-135 = 51 dB au-dessus du niveau présumé de la cible qui présente un rapport signal à bruit thermique de 198-186 = 12 dB.

L'invention vise donc à rejeter efficacement le trajet direct et le fouillis dans un signal reçu à large bande avant la corrélation Doppler-distance afin de détecter des cibles mobiles.

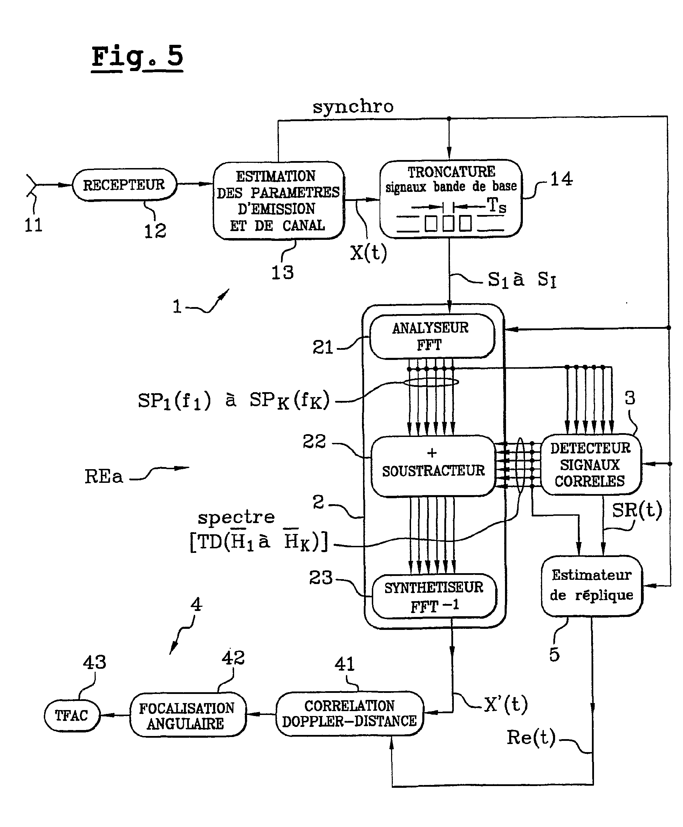

En référence maintenant à la figure 5, un récepteur radar passif REa pour signaux OFDM selon l'invention comprend un circuit de mise en forme de signal reçu 1, un circuit de filtrage de signaux corrélés 2, un détecteur de signaux corrélés 3, un circuit de détermination de cibles 4 et un estimateur de réplique de signal émis 5.

Le circuit de mise en forme de signal reçu 1 comprend classiquement en entrée une antenne 11 et un étage de réception à radiofréquence OFDM 12 analogues à ceux pour recevoir des signaux de radiodiffusion et télédiffusion OFDM. Après transposition en fréquence, l'étage de réception 12 convertit numériquement le signal radioélectrique reçu suivant X(t) en bande de base et l'applique à un circuit d'estimation de paramètres d'émission et de canal 13:

$$X(t) = TD(t) + SC(t) + B(t),$$

où pour chaque symbole émis $\sum_{k=1}^{k=K} C_k\ e^{2j\pi kt/T}{}_S$, en faisant abstraction de l'indice i du symbole $S_i$ :

$$-\quad TD(t) = \sum_{k=1}^{k=K} H_k\ C_k\ e^{j2\pi kt/T}{}_S$$

désigne un signal OFDM reçu provenant à la fois d'au moins un émetteur EM ou éventuellement de plusieurs émetteurs OFDM selon des trajets directs et des trajets multiples dûs à des réflecteurs fixes RF et correspondant au fouillis (clutter), comme illustré à la figure 3 ; $H_k$ désigne un coefficient complexe correspondant à la fonction de transfert du canal de propagation EM-REa relativement à ces trajets pour la raie $f_k$ ; le signal TD(t) est constitué par la superposition de signaux parasites à effet Doppler nul dûs aux trajets directs et multiples ; ces signaux parasites sont appelés "signaux corrélés" ;

$$-\quad SC(t) = \sum_{k=1}^{k=K} h_c\ C_k\ e^{j2\pi k(t-\tau)/T}{}_S\ e^{-j2\pi vt}$$

désigne un signal reçu OFDM issu de la rétrodiffusion de signaux émis OFDM par au moins une cible mobile CB et donc affectés d'un effet Doppler non nul ; il constitue le signal utile à extraire dont la puissance est très faible comparativement à celle des signaux corrélés TD(t) ; $h_c$ est la fonction de transfert à bande étroite de la cible CB, $\tau$ dénote la différence de marche entre le trajet direct et le trajet réfléchi par la cible, et $v$ est la fréquence Doppler de la cible ;

- B(t) désigne des signaux reçus dans la bande passante utile, appelés brouilleurs, autres que les signaux OFDM corrélés, tels que des signaux d'interférence et de bruit thermique.

Le circuit 13 estime les paramètres du signal émis, tels que la fréquence de porteuse $F_0$ et la durée de symbole $T_S$ en fonction d'une analyse des deux premiers symboles $S_1$ et $S_2$ d'une trame (figure 2) afin de constituer une référence temporelle. Connaissant la période $T'_S$ du signal émis et la durée durée $T_S$ de chaque symbole, la longueur temporelle du canal est déduite du processus de synchronisation de la référence temporelle précédente, en analysant le signal reçu à l'intérieur de chaque intervalle de garde $\Delta$ qui est supérieur à la longueur temporelle de canal.

Puis, le signal reçu est tronqué périodiquement dans un circuit de troncature 14. La partie stationnaire des symboles reçus de durée $T_S$ est récupérée en retirant la portion de signal reçu dans l'intervalle de garde $\Delta$ de chaque période $T'_S$ et particulièrement en retirant la longueur de canal déduite dans chaque période.

Chaque partie de durée $T_S$ dans le signal reçu numérique en bande de base est ensuite appliquée à un analyseur de Fourier 21 en entrée du circuit de filtrage 2. L'analyseur produit les composantes réelle et imaginaire du signal reçu pour chaque durée $T_S$ par transformée de Hilbert et les analyse par transformée de Fourier rapide FFT pour fournir le spectre fréquentiel de chaque symbole $S_i$ délivré par le circuit de troncature 14. Les K raies spectrales $SP_1$ à $SP_K$ du symbole relatives aux fréquences $f_1$ à $f_K$ sont appliquées au détecteur 3 et à des premières entrées d'un soustracteur 22. L'information portée par chaque raie spectrale $SP_k$ relative à une fréquence émise indépendamment des autres fréquences est liée d'une part au codage de la raie spectrale correspondante et d'autre part à la fonction de transfert $H_k$ du canal de propagation.

Pendant une phase d'apprentissage récurrente à chaque trame de symboles, le détecteur 3 déduit des raies spectrales de chaque symbole de la trame, les raies spectrales d'un signal de référence SR(t) tel que :

$$SR(t) = \sum_{k=1}^{k=K} \overline{H}_k\ C_k\ e^{j2\pi kt/T}{}_S + b(t).$$

$\overline{H}_k$ est la moyenne des I-1 coefficients de la fonction de transfert de canal de propagation pour la raie $SP_k$ pendant les symboles $S_2$ à $S_I$ de la trame, soit quasiment $|\overline{H}_k| = |H_k|$, ce qui améliore l'estimation de la fonction de transfert du canal, en la rendant moins dépendante de variations d'amplitude et de phase instantanées. Ce moyennage permet de négliger le signal rétrodiffusé de cible SC(t) et donc de caractériser le canal de propagation et les signaux corrélés. Le signal de bruit b(t) désigne une moyenne de brouilleurs reçus pendant la trame, composés essentiellement d'un bruit thermique de variance inférieure à celle des brouilleurs B(t).

Après avoir mémorisé les coefficients de fonction de transfert $\overline{H}_1$ à $\overline{H}_K$ moyennés pendant une trame, le détecteur 3 applique les raies spectrales des signaux corrélés à effet Doppler nul moyennées sur une trame, c'est-à-dire les raies moyennées du signal SR(t) dépendant des coefficients $\overline{H}_1$ à $\overline{H}_K$ à K deuxièmes entrées du soustracteur 22. Le soustracteur soustrait les raies du signal SR(t) aux raies spectrales de signal reçu $SP_1$ à $SP_K$, relativement à chaque symbole $S_2$ à $S_I$ de la trame. Le soustracteur 22 produit alors des raies spectrales d'un signal filtré :

$$X'(t) = SC(t) + B(t) - b(t)$$

dans lesquelles a été éliminée la contribution des signaux corrélés à effet Doppler nul dûs au trajet direct et aux trajets multiples par la soustraction $H_k - \overline{H}_k = 0$ pour chaque fréquence respective $f_k$.

Dans le circuit de filtrage 2, les raies du signal X'(t) sont synthétisées par transformée de Fourier rapide inverse $FFT^{-1}$ dans un synthétiseur 23 qui restitue le train de symboles du signal numérique X'(t) comprenant principalement le signal de rétrodiffusion de cible SC(t). Ce signal X'(t) est appliqué au circuit de discrimination de cibles 4.

Parallèlement, l'estimateur de réplique de signal émis 5 reçoit les coefficients $\overline{H}_k = H_k$ de la fonction de transfert de canal estimée par le détecteur 3 et les densités spectrales du signal de référence SR(t) pour estimer une réplique Re(t) du signal émis :

$$Re(t) = \sum_{k=1}^{k=K} C_k\, e^{j2\pi kt/T}S.$$

De manière analogue à une voie Doppler du récepteur radar selon la demande de brevet français FR 2776438, le circuit de discrimination de cibles 4 comprend un corrélateur Doppler-distance 41. Des voies Doppler dans le corrélateur 41 sont affectées d'un écart de fréquence prédéterminé les unes par rapport aux autres dû à l'effet Doppler. Les voies Doppler constituent plusieurs cases vitesse du signal filtré X'(t) par des changements de fréquence et sont corrélées chacune, pour chaque porteuse $f_1$ à $f_K$, à la réplique de signal émis Re($\tau$). Après sommation, un circuit de focalisation angulaire 42 détermine des cases angulaires positionnant des cibles mobiles. Enfin, un circuit de Traitement de Fausse Alarme Constante (TFAC) 43 extrait des "plots" relatifs à des données de positionnement et vitesse sur des cibles mobiles recherchées.

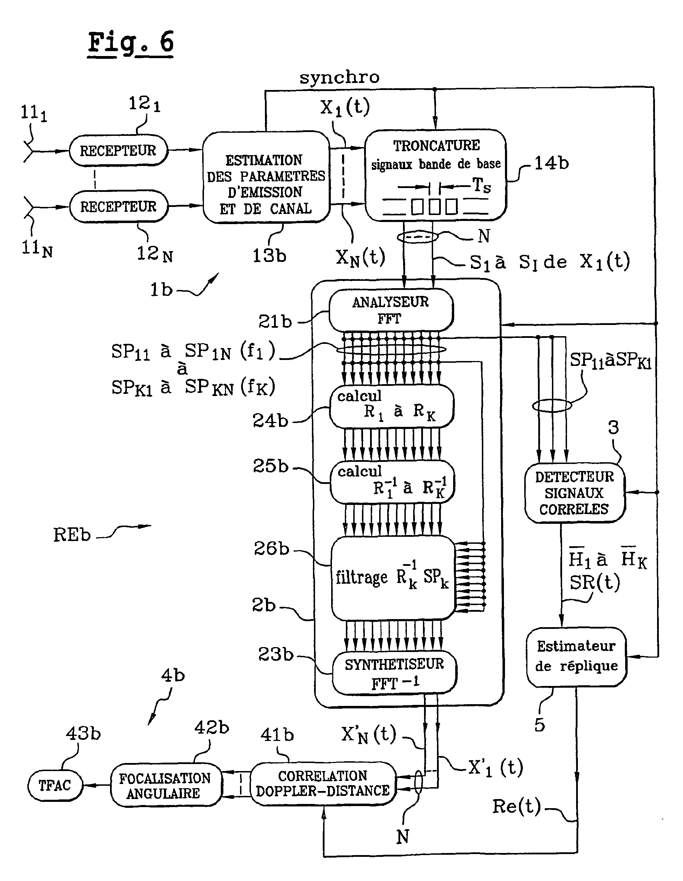

Bien que cette première réalisation ait été décrite pour un radar bistatique, celle-ci peut être appliquée à un radar monostatique. Elle peut être également mise en oeuvre dans un radar avec plusieurs antennes de réception et donc plusieurs filtrages par soustraction de raies spectrales dépendant des coefficients de fonction de transfert $\overline{H}_1$ à $\overline{H}_K$ pour les K raies spectrales relatives à chaque antenne de réception dans le circuit de filtrage 2 qui produit autant de signaux filtrés X'(t) que d'antennes pour être traités en parallèle dans des voies Doppler du circuit 4, comme dans le circuit 4b montré à la figure 6.

Dans la réalisation décrite ci-dessus selon la figure 5, le signal reçu X(t) était traité pour y éliminer la contribution du trajet direct et des trajets multiples entre au moins un émetteur COFDM EM et le récepteur REa. Toutefois, les brouilleurs, tels que signaux d'interférence et bruit thermique dans la bande de fréquence utile, n'étaient pas éliminés dans le signal X'(t) traité par le corrélateur 41.

Selon une deuxième réalisation montrée à la figure 6, le récepteur Radar REb vise à éliminer tous les signaux corrélés parasites et brouilleurs.

Le récepteur REb comprend plusieurs antennes de réception $11_1$ à $11_N$ reliées respectivement à plusieurs récepteurs $12_1$ à $12_N$ pour signaux COFDM avec $N \geq 2$. Le récepteur radar REb présente une structure analogue à celui REa montré à la figure 5, mais avec N voies de réception parallèles entre les circuits 13b, 14b, 2b et 4b respectivement associées aux antennes $11_1$ à $11_N$.

Le détecteur 3 et l'estimateur de réplique 5 ne sont pas modifiés. Le détecteur 3 produit un signal de référence SR(t) relatif à l'une des antennes $11_1$ à $11_N$, par exemple en fonction des K raies spectrales $SP_{11}$ à $SP_{K1}$ de la première voie liée à l'antenne $11_1$, qui sont délivrées par l'analyseur de spectre 21b qui analyse N trains de symbole reçus fournis par le circuit de troncature 14b. L'estimateur 5 produit une réplique de signal émis à bande étroite Re(t) appliqués à N corrélateurs Doppler-distance 41b dans le circuit de discrimination de cibles 4.

Comparativement au récepteur REa, le récepteur REb en diffère essentiellement par le circuit de filtrage à bandes étroites 2b qui supprime les signaux parasites à effet Doppler nul TD(t) et les brouilleurs B(t).

Le circuit de filtrage 2b comprend, entre l'analyseur de spectre 21b produisant en parallèle K raies spectrales pour chaque symbole des signaux reçus $X_1(t)$ à $X_N(t)$ et le synthétiseur de Fourier 23b fournissant N signaux filtrés $X_1'(t)$ à $X_N'(t)$ aux corrélateurs 41b, successivement un module de calcul de matrices de covariance 24b, un module de calcul de matrices de covariance inverses 25b et un module de filtrage 26b.

Pour chaque raie $SP_k$ à la fréquence $f_k$, délivrée par l'analyseur 21b, le module 24b estime une matrice de covariance $R_k$ de dimensions NxN dans laquelle une ligne de rang donné n est composée des produits de la raie spectrale $SP_{kn}$ reçue relative à une antenne donnée $11_n$ par les conjugués des raies spectrales reçues $SP_{k1}$ à $SP_{kN}$ reçues relatives aux N antennes $11_1$ à $11_N$, les produits étant moyennés pour des symboles pendant une durée prédéterminée, avec $1 \leq n \leq N$. De préférence, la durée prédéterminée pour moyenner lesdits produits est nettement plus longue que la durée de symbole $T_S$, et est typiquement la durée d'une trame, soit des produits moyennés sur I-1 symboles $S_2$ à $S_I$. Le moyennage desdits produits sur un grand nombre de symboles, c'est-à-dire sur une centaine de symboles composant la trame, décorrèle le signal de cible des signaux parasites reçus avec un niveau élevé par les antennes. L'orthogonalité des raies spectrales entre elles permet de rendre les matrices de covariance $R_1$ à $R_K$ indépendantes du codage.

Puis le module 25b déduit les matrices inverses $R_1^{-1}$ à $R_K^{-1}$ des K matrices de covariance et les mémorise. Ces K matrices inverses de dimensions NxN font office de K filtres dans le module 26b respectivement pour filtrer K groupes de N raies spectrales chacun $SP_{11}$ - $SP_{1N}$ à $SP_{K1}$ - $SP_{KN}$ délivrées par l'analyseur 21b. Chaque groupe de N raies spectrales reçues $SP_{k1}$ à $SP_{kN}$ pour une fréquence donnée $f_k$ est ainsi filtré par un filtre qui à chaque symbole fournit le produit du vecteur colonne composé des N raies spectrales reçues $SP_{k1}$ - $SP_{kN}$ pour ce symbole et la fréquence $f_k$ par la matrice inverse $R_k^{-1}$. Les N groupes à K signaux de filtrage chacun fournis par le module de filtrage 26b sont ensuite appliqués au synthétiseur 23b qui délivre N signaux temporels de symboles $X_1'(t)$ à $X_N'(t)$ dans les corrélateurs 41b. Dans le circuit de discrimination de cibles 4b, les N corrélateurs 41b sont suivis par des circuits de focalisation angulaire 42b et un circuit TFAC 43b.

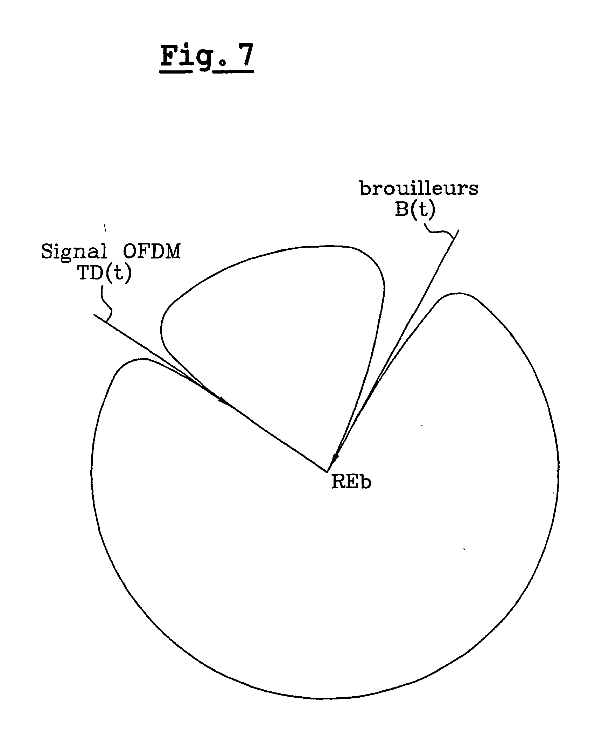

Le diagramme de rayonnement des signaux $X_1'(t)$ à $X_N'(t)$ présente des axes aveugles, c'est-à-dire des "trous" suivant les directions de réception des signaux corrélés OFDM et des brouilleurs, comme montré à la figure 7.

## Revendications

1. Récepteur radar traitant un signal radioélectrique reçu à travers un canal de propagation (EM-RE) et composé de trames de symboles émis chacun sur des porteuses orthogonales codées ($f_1$ - $f_K$), comprenant un moyen de réception (11, 12) pour mettre le signal reçu sous forme d'un signal numérique de symboles et un moyen de corrélation Doppler-distance (4) pour discriminer des cibles mobiles, **caractérisé en ce qu'**il comprend un moyen (13) pour estimer des paramètres du signal numérique émis (X, $S_1$-$S_I$) dans deux symboles ($S_1$, $S_2$) de la trame, un moyen (21) utilisant lesdits paramètres pour produire des raies spectrales ($SP_1$ - $SP_K$) du signal numérique de symboles (X) correspondant aux porteuses orthogonales ($f_1$ - $f_K$), et un moyen de filtrage fréquentiel (2) utilisant lesdits paramètres pour éliminer dans les raies spectrales ($SP_1$ - $SP_K$) au moins des signaux parasites à effet Doppler nul (TD) afin d'appliquer un signal filtré numérique (X') contenant essentiellement des signaux rétrodiffusés (SC) par des cibles (CB) au moyen de corrélation (4), le moyen de filtrage fréquentiel (2) comprenant un moyen (3) pour détecter les signaux parasites à effet Doppler nul (TD) par estimation de coefficients de la fonction de transfert ($\overline{H}_1$ - $\overline{H}_K$) du canal de propagation respectivement dans les raies spectrales, un moyen (22) pour soustraire les raies spectrales des signaux parasites à effet Doppler nul (TD) déduits des coefficients de la fonction de transfert estimée aux raies spectrales de signal de symboles ($SP_1$ - $SP_K$), et un moyen (23) pour synthétiser les raies spectrales produites par le moyen pour soustraire (22) en le signal filtré numérique (X').

2. Récepteur radar conforme à la revendication 1, dans lequel les raies spectrales des signaux parasites (TD) sont estimées pour chaque symbole et moyennées sur chaque trame dans le moyen pour détecter (3), avant d'être soustraites aux raies spectrales ($SP_1$ - $SP_K$) du signal numérique de symboles.

**3.** Récepteur radar conforme à la revendication 1 ou 2, comprenant un moyen (5) pour estimer une réplique de signal émis (Re) en fonction des raies spectrales des signaux parasites à effet Doppler nul (TD), la réplique estimée étant corrélée au signal filtré (X') dans le moyen de corrélation Doppler-distance (4).

**4.** Récepteur radar traitant un signal radioélectrique reçu à travers un canal de propagation (EM-RE) et composé de trames de symboles émis chacun sur des porteuses orthogonales codées ($f_1$ - $f_K$), comprenant plusieurs moyens de réception ($11_1$, $12_1$ à $11_N$, $12_N$) pour mettre plusieurs signaux reçus sous forme de signaux numériques de symboles ($X_1$ - $X_N$) et un moyen de corrélation Doppler-distance (4b) pour discriminer des cibles mobiles, **caractérisé en ce qu'**il comprend un moyen (13b) pour estimer des paramètres du signal numérique émis (X, $S_1$-$S_I$) dans deux symboles ($S_1$, $S_2$) de la trame, un moyen (21b) utilisant lesdits paramètres pour produire des groupes de raies spectrales ($SP_{11}$ - $SP_{1N}$ à $SP_{K1}$ - $SP_{KN}$) des signaux numériques de symboles ($X_1$ - $X_N$) correspondant respective-ment aux porteuses orthogonales ($f_1$ - $f_K$), un moyen de filtrage fréquentiel (2) utilisant lesdits paramètres pour éliminer dans les raies spectrales ($SP_{11}$ - $SP_{1N}$ à $SP_{K1}$ - $SP_{KN}$) au moins des signaux parasites à effet Doppler nul (TD) afin d'appliquer des signaux filtrés numériques ( $X_1'$ − $X_N'$ ) contenant essentiellement des signaux rétrodiffusés (SC) par des cibles (CB) au moyen de corrélation (4b),
le moyen de filtrage fréquentiel (2b) comprenant un moyen (24b) pour estimer des matrices de covariance ($R_1$ - $R_K$) dépendant chacune de produits des raies spectrales ($SP_{k1}$ à $SP_{kN}$) deux à deux dans un groupe relatif à une porteuse respective ($f_k$), un moyen (25b) pour déduire des matrices inverses ($R_1^{-1}$ à $R_K^{-1}$) des matrices de covariance, un moyen (26b) pour filtrer les groupes de raies spectrales relatifs respectivement aux porteuses ($f_1$ - $f_K$) en multipliant les groupes de raies par les matrices inverses respectives afin de produire des groupes filtrés de raies spectrales et un moyen (23b) pour synthétiser les groupes filtrés de raies spectrales en des signaux de symboles filtrés numériques ( $X_1'$ − $X_N'$ ) contenant essentiellement des signaux rétrodiffusés par des cibles (CB) appliqués au moyen de corrélation (4b).

**5.** Récepteur radar conforme à la revendication 4, dans lequel les produits de raies spectrales dont dépendent les matrices de covariances ($R_1$ - $R_K$) dépendent de raies spectrales de symboles et sont moyennés sur chaque trame.

**6.** Récepteur radar conforme à la revendication 4 ou 5, comprenant un moyen (3, 5) pour estimer une réplique de signal émis (Re) en fonction des raies spectrales ($SP_{11}$ - $SP_{K1}$) de l'un des signaux de symboles ($X_1$) par estimation de coefficients de la fonction de transfert du canal de propagation dans les signaux parasites à effet Doppler nul, la réplique estimée étant corrélée aux signaux de symboles filtrés numériques ( $X_1'$ − $X_N'$ ) dans le moyen de corrélation (4b).

**Claims**

**1.** Radar receiver for processing a radio signal received via a propagation channel (EM-RE) and consisting of frames of symbols which are each emitted on coded orthogonal carriers ($f_1$ - $f_K$), comprising a receiving means (11, 12) for converting the received signal into a digital signal of symbols and a Doppler-distance correlation means (4) for distinguishing mobile targets, **characterised in that** the radar receiver comprises a means (13) for estimating parameters of the emitted digital signal (X, $S_1$ - $S_I$) in two symbols ($S_1$, $S_2$) of the frame, a means (21) using said parameters to produce spectral lines ($SP_1$ - $SP_K$) of the digital signal of symbols (X) corresponding to the orthogonal carriers ($f_1$ - $f_K$), and a frequency filtering means (2) using said parameters to eliminate at least the clutter at zero Doppler shift (TD) in the spectral lines ($SP_1$ - $SP_k$) in order to apply a digital filtered signal (X') basically containing signals (SC) which have been backscattered by targets (CB) to the correlation means (4),
the frequency filtering means (2) comprising a means (3) for detecting the clutter at zero Doppler shift (TD) by estimating coefficients of the transfer function ($\overline{H}_1$ - $\overline{H}_K$) of the propagation channel respectively in the spectral lines, a means (22) for subtracting the spectral lines of the clutter at zero Doppler shift (TD) which is deduced from the coefficients of the estimated transfer function from the spectral lines of the symbol signal ($SP_1$ - $SP_K$), and a means (23) for synthesising the spectral lines produced by the subtraction means (22) into the digital filtered signal (X').

2. Radar receiver according to claim 1, wherein the spectral lines of the clutter (TD) are estimated for each symbol and averaged over each frame in the detection means (3) before being subtracted from the spectral lines ($SP_1$ - $SP_K$) of the digital signal of symbols.

3. Radar receiver according to either claim 1 or claim 2, comprising a means (5) for estimating an emitted signal replica (Re) as a function of the spectral lines of the clutter at zero Doppler shift (TD), the estimated replica being correlated to the filtered signal (X') in the Doppler-distance correlation means (4).

4. Radar receiver for processing a radio signal received via a propagation channel (EM-RE) and consisting of frames of symbols which are each emitted on coded orthogonal carriers ($f_1$ - $f_K$), comprising a plurality of receiving means ($11_1$, $12_1$ to $11_N$, $12_N$) for converting a plurality of received signals into digital signals of symbols ($X_1$ - $X_N$) and a Doppler-distance correlation means (4b) for distinguishing mobile targets, **characterised in that** the radar receiver comprises a means (13b) for estimating parameters of the emitted digital signal (X, $S_1$ - $S_l$) in two symbols ($S_1$, $S_2$) of the frame, a means (21b) using said parameters to produce groups of spectral lines ($SP_{11}$ - $SP_{1N}$ to $SP_{K1}$ - $SP_{KN}$) of the digital signals of symbols ($X_1$ - $X_N$) corresponding respectively to the orthogonal carriers ($f_1$ - $f_K$), a frequency filtering means (2) using said parameters to eliminate at least the clutter at zero Doppler shift (TD) in the spectral lines ($SP_{11}$ - $SP_{1N}$ to $SP_{K1}$ - $SP_{KN}$) in order to apply digital filtered signals ($X'_1$ - $X'_N$) basically containing signals (SC) which have been backscattered by targets (CB) to the correlation means (4b),
the frequency filtering means (2b) comprising a means (24b) for estimating covariance matrices ($R_1$ - $R_K$) which each depend on products of the spectral lines ($SP_{k1}$ to $SP_{kN}$) in pairs in a group relating to a respective carrier ($f_K$), a means (25b) for deducing inverse matrices ($R_1^{-1}$ to $R_K^{-1}$) of the covariance matrices, a means (26b) for filtering the groups of spectral lines relating respectively to the carriers ($f_1$ - $f_K$) by multiplying the groups of lines by the respective inverse matrices to produce filtered groups of spectral lines, and a means (23b) for synthesising the filtered groups of spectral lines into signals of digital filtered symbols ($X'_1$ - $X'_N$) basically containing signals which have been backscattered by targets (CB) and applied to the correlation means (4b).

5. Radar receiver according to claim 4, wherein the spectral line products, on which the covariance matrices ($R_1$-$R_K$) are dependent, depend on spectral lines of symbols and are averaged over each frame.

6. Radar receiver according to either claim 4 or claim 5, comprising a means (3, 5) for estimating an emitted signal replica (Re) as a function of the spectral lines ($SP_{11}$ - $SP_{K1}$) of one of the signals of symbols ($X_1$) by estimating coefficients of the transfer function of the propagation channel in the clutter at zero Doppler shift, the estimated replica being correlated to the digital filtered signals of symbols ($X'_1$ - $X'_N$) in the correlation means (4b).

**Patentansprüche**

1. Radarempfänger zum Verarbeiten eines Funksignals, das über einen Ausbreitungskanal (EM-RE) empfangen wird, und sich aus Symbolrastern zusammensetzt, die jeweils auf codierten orthogonalen Trägern ($f_1$-$f_k$) ausgesandt werden, umfassend eine Empfangsvorrichtung (11, 12), um das empfangene Signal in die Form eines digitalen Symbolsignals zu bringen und eine Doppler-Entfernung (4) Korrelationsvorrichtung zum Unterscheiden der beweglichen Ziele, **dadurch gekennzeichnet, dass** er eine Vorrichtung (13) zum Einschätzen der Parameter des ausgesandten digitalen Signals (X, $S_1$-$S_l$) in zwei Symbolen ($S_1$, $S_2$) des Rasters umfasst, eine Vorrichtung (21), die die besagten Parameter verwendet, um Spektrallinien ($SP_1$ - $SP_k$) aus dem digitalen Symbolsignal (X) entsprechend den orthogonalen Trägern ($f_1$-$f_k$) herzustellen, und eine Vorrichtung zur Frequenzfilterung (2) unter Verwendung der besagten Parameter zum Eliminieren zumindest der Parasitensignale mit Null Dopplereffekt (TD) aus den Spektrallinien ($SP_1$ - $SP_k$), um ein gefiltertes digitales Signal (X') anzuwenden, das im Wesentlichen Signale (SC) umfasst, die von den Zielen (CB) über die Korrelationsvorrichtung (4) zurückgestrahlt werden,
wobei die Vorrichtung zur Frequenzfilterung (2) eine Vorrichtung (3) zum Erfassen von Parasitensignalen mit Null Dopplereffekt (TD) durch die Einschätzung von Koeffizienten der Transferfunktion (H1 - Hk) des Ausbreitungskanals jeweils in den Spektrallinien umfasst, sowie eine Vorrichtung (22) zum Subtrahieren der Spektrallinien der Parasitensignale mit Null Dopplereffekt (TD), die von den Koeffizienten der eingeschätzten Transferfunktion abgeleitet werden, von den Spektrallinien des Symbolsignals ($SP_1$ - $SP_k$), und eine Vorrichtung (23) zum synthetischen Erzeugen der Spektrallinien, die von der Vorrichtung (22) zum Subtrahieren im gefilterten digitalen Signal (X') erzeugt werden.

2. Radarempfänger nach Anspruch 1, bei dem die Spektrallinien der Parasitensignale (TD) für jedes Symbol eingeschätzt werden, und auf jedem Raster in der Erfassungsvorrichtung (3) gemittelt werden, bevor sie von den Spek-

trallinien (SP$_1$ - SP$_k$) des digitalen Symbolsignals subtrahiert werden.

3. Radarempfänger nach Anspruch 1 oder 2, umfassend eine Vorrichtung (5) zum Einschätzen einer Replik eines ausgesandten Signals (Re) in Abhängigkeit von den Spektrallinien der Parasitensignale mit Null Dopplereffekt (TD), wobei die eingeschätzte Replik in der Doppler-Entfernung (4) Korrelationsvorrichtung mit dem gefilterten Signal (X') korreliert wird.

4. Radarempfänger zum Verarbeiten eines Funksignals, das über einen Ausbreitungskanal (EM-RE) empfangen wird, und sich aus Symbolrastern zusammensetzt, die jeweils auf codierten orthogonalen Trägern (f$_1$-f$_k$) ausgesandt werden, umfassend mehrere Empfangsvorrichtungen (11$_1$, 12$_1$ bis 11$_N$, 12$_N$), um mehrere empfangene Signale in die Form von digitalen Symbolsignalen (X$_1$ - X$_N$) zu bringen und eine Doppler-Distanz (4b) Korrelationsvorrichtung zum Unterscheiden der beweglichen Ziele, **dadurch gekennzeichnet, dass** er eine Vorrichtung (13b) zum Einschätzen der Parameter des ausgesandten digitalen Signals (X, S$_1$-S$_I$) in zwei Symbolen (S$_1$, S$_2$) des Rasters umfasst, eine Vorrichtung (21 b), die die besagten Parameter verwendet, um Spektrallinien (SP$_{11}$ - SP$_{1N}$ bis SP$_{K1}$ - SP$_{KN}$) aus den digitalen Symbolsignalen (X$_1$ - X$_N$) jeweils entsprechend den orthogonalen Trägern (f$_1$-f$_k$) herzustellen, und eine Vorrichtung zur Frequenzfilterung (2) unter Verwendung der besagten Parameter zum Eliminieren zumindest der Parasitensignale mit Null Dopplereffekt (TD) aus den Spektrallinien (SP$_{11}$ - SP$_{1N}$ bis SP$_{K1}$ - SP$_{KN}$), um gefilterte digitale Signale (X'$_1$ - X'$_N$) anzuwenden, die im Wesentlichen Signale (SC) umfassen, die von den Zielen (CB) Korrelationsvorrichtungen (4b) zurückgestrahlt werden, wobei die Vorrichtung zur Frequenzfilterung (2b) eine Vorrichtung (24b) zum Einschätzen von Kovarianz-Matrizen (R$_1$-R$_K$) umfasst, die jeweils paarweise in einer Gruppe in Bezug auf einen jeweiligen Träger (f$_K$) von Produkten der Spektrallinien (SP$_{k1}$ - SP$_{kN}$) abhängen, eine Vorrichtung (25b) zum Ableiten der Umkehrmatrizen (R$^{-1}_1$-R$^{-1}_k$) der Kovarianz-Matrizen, eine Vorrichtung (26b) zum Filtern der Spektralliniengruppen jeweils in Bezug auf die Träger (f$_1$-f$_k$) durch das Multiplizieren der Liniengruppen mit den jeweiligen Umkehrmatrizen zum Erzeugen von gefilterten Spektralliniengruppen und eine Vorrichtung (23b) zum synthetischen Erzeugen der gefilterten Spektralliniengruppen in gefilterten digitalen Symbolsignalen (X'$_1$-X'$_N$), die im Wesentlichen Signale (SC) umfassen, die von den Zielen (CB) über die Korrelationsvorrichtung (4b) zurückgestrahlt werden.

5. Radarempfänger nach Anspruch 4, bei dem die Spektrallinienprodukte, von denen die Kovarianz-Matrizen (R$_1$-R$_K$) abhängen, von Symbolspektrallinien abhängen und auf jeder Matrize gemittelt werden.

6. Radarempfänger nach Anspruch 4 oder 5, umfassend eine Vorrichtung (3, 5) zum Einschätzen einer Replik eines ausgesandten Signals (Re) in Abhängigkeit von den Spektrallinien (SP$_{11}$ - SP$_{k1}$) eines der Symbolsignale (X$_1$) durch die Einschätzung von Koeffizienten der Transferfunktion des Ausbreitungskanals in den Parasitensignalen mit Null Dopplereffekt, wobei die eingeschätzte Replik in der Korrelationsvorrichtung (4b) mit den gefilterten digitalen Symbolsignalen (X'$_1$-X'$_N$) korreliert wird.

## Fig. 1

$$\sum_{k=1}^{k=K} C_{k,i} e^{j2\pi kt/T_s}$$

$$\sum_{k=1}^{k=K} C_{k,i+1} e^{j2\pi kt/T_s}$$

## Fig. 2

trame

"nul"
$F_0$

S

$S_2$
$f_1 - f_K$
prédéterminés

$S_3$
codé

$S_i$
codé

$S_I$
codé

## Fig. 3

EM (COFDM)

RF

trajet
direct

CB

trajets
multiples

0

SC(t)

TD(t)

RE

## Fig. 4

trajet
direct

−83dB

−135dB

Lobes secondaires
du trajet direct

Fouillis
−133dB

−185dB

Lobes secondaires
du fouillis

−186dB

−198dB

Bruit Thermique

## Fig. 5

synchro

```
11 ──▷ RECEPTEUR ──▷ ESTIMATION ──▷ TRONCATURE ── 14
        12          DES PARAMETRES    signaux bande de base
                    D'EMISSION        ├─→ ┤ ├─ Tₛ
                    ET DE CANAL       ▭ ▭ ▭
                        13
                             X(t)
              1 ↗

                                      S₁ à S_I

                    21 ── ANALYSEUR
                          FFT

SP₁(f₁) à SP_K(f_K)

                                                          3
    REa ↗              22 ──  +                    DETECTEUR
                            SOUSTRACTEUR           SIGNAUX
                                                   CORRELES
                    2

   spectre                                          SR(t)
   [TD(H̄₁ à H̄_K)]

                    23 ── SYNTHETISEUR           Estimateur
          4              FFT −1                  de réplique

   43        42           41                          5

  TFAC   FOCALISATION   CORRELATION      X'(t)
         ANGULAIRE      DOPPLER−DISTANCE
                                          Re(t)
```

## Fig. 6

synchro

$X_1(t)$

$11_1$    $12_1$

RECEPTEUR

ESTIMATION
DES PARAMETRES
D'EMISSION
ET DE CANAL

TRONCATURE
signaux bande de base
$T_s$
14b

RECEPTEUR

$11_N$    $12_N$    13b    $X_N(t)$

1b

N

$S_1$ à $S_I$ de $X_1(t)$

ANALYSEUR
FFT

21b

$SP_{11}$ à $SP_{1N}(f_1)$
à
$SP_{K1}$ à $SP_{KN}(f_K)$

$SP_{11}$à$SP_{K1}$

calcul
$R_1$ à $R_K$

24b

3

calcul
$R_1^{-1}$ à $R_K^{-1}$

25b

DETECTEUR
SIGNAUX
CORRELES

REb

filtrage $R_k^{-1} SP_k$

26b

2b

$\overline{H}_1$ à $\overline{H}_K$
$SR(t)$

SYNTHETISEUR
$FFT^{-1}$

23b

Estimateur
de réplique

4b

43b    42b    41b    $X'_N(t)$

5

TFAC

FOCALISATION
ANGULAIRE

CORRELATION
DOPPLER-DISTANCE

$X'_1(t)$

N

Re(t)

# Fig. 7

Signal OFDM
TD(t)

brouilleurs
B(t)

REb

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776438

- EP 0681190 A